Europäisches Patentamt

European Patent Office

Office européen des brevets

(11) Publication number: **0 263 710**
**A1**

(12) **EUROPEAN PATENT APPLICATION**

(21) Application number: **87308922.1**

(22) Date of filing: **08.10.87**

(51) Int. Cl.⁴: **F 16 B 12/46**
**A 47 B 47/04**

(30) Priority: **10.10.86 GB 8624380**

(43) Date of publication of application:
**13.04.88 Bulletin 88/15**

(84) Designated Contracting States:
**BE CH DE ES FR GB IT LI NL SE**

(71) Applicant: **Peters, Cyril William**
**Merton Cottage Middle Lincombe**
**Torquay Devon (GB)**

(72) Inventor: **Peters, Cyril William**
**Merton Cottage Middle Lincombe**
**Torquay Devon (GB)**

(74) Representative: **Harrison, Ivor Stanley et al**
**Withers & Rogers 4 Dyer's Building Holborn**
**London EC1N 2JT (GB)**

(54) **Furniture assembly system.**

(57) A furniture assembly system comprises shelf members and spacer members, in which in use the spacer members form upright partitions between two or more shelf members, the spacer members engaging the shelf members via integrally- or separately-formed members defining opposed inwardly-facing grooves or recess at edge regions thereof.

FIG 2

EP 0 263 710 A1

**Description**

FURNITURE ASSEMBLY SYSTEM

This invention relates to a furniture assembly system for the assembly in particular of shelves but also for dressers, book-cases, tables, room dividers and the like which are constituted by one or more substantially horizontal working surfaces. Such furniture may be suitable for domestic, commercial or industrial use.

Various systems are known for the assembly of furniture in the home by unskilled persons but in general they require component parts to be fixed together by means of screws, lugs or other fixing means which, once inserted, cannot be removed without leaving a mark or a hole. Such systems therefore require either to be pre-drilled, or otherwise formed with holes for receipt of screws or lugs, or require to be drilled by the user, which implies the need for at least a degree of skill. Furthermore, such systems are not readily adaptable either to being assembled to fit any size of corner or alcove, for example, or to being altered or enlarged at a subsequent time.

One example of furniture which can be assembled without the use of tools is described in British patent no. 1457770, in which an article of furniture comprises vertical parallel posts and a horizontal panel extending therebetween, each post being provided with at least one longitudinal groove having a narrow neck opening to retain therein the ends of rods or other interconnections which constitute horizontal panel supports.

It is an object of this invention to provide a furniture system which is easy to assemble without tools or fixings with the minimum of skill, which is readily adaptable to any size and to being altered or extended and which avoids the need for vertical posts as an essential feature thereof.

According to the present invention, a furniture assembly system comprises shelf members and spacer members, in which in use the spacer members form substantially upright partitions between two or more shelf members, at least one of the upper and lower edges of each spacer member being interengageable with edge regions of a shelf member.

The furniture assembly system according to the invention also optionally includes interlocking separator members to aid rigidity in the resulting structure. The separator members may themselves include means for engagement with shelf members, and/or may be trapped in position by the shelf member(s) when interengaged with the spacer member(s).

Preferably, the spacer members and shelf members are interengageable by engagement means comprising members which are formed on the spacer members and define inwardly-facing opposed grooves or recesses for receipt therebetween of a shelf member. Advantageously the spacer members are engageable with longitudinal edge regions of the shelf members.

Preferably both the upper and lower edges of the spacer members are provided with the engagement means, whereby shelf members may be located both above and below a spacer member, although foot or base members, for example, may have engagement means at their upper edges only and book ends and finishers may have engagement means at their lower edges only.

Spacer members in a furniture assembly system according to the invention may be engageably located in any number and at any desired position along the shelf members, and used to increase the height of the assembly system by supporting one shelf on the shelf below, thereby rendering the system adaptable in size and in design of the completed furniture. The engagement means of the spacer members cooperate with edge regions of the shelf members, to permit longitudinal sliding movement of the spacer members relative to the shelf members while laterally and vertically retaining them in position relative to the shelf members. Thus the spacer members may be slid along the shelf members to any desired position and are susceptible to forces in a longitudinal horizontal plane for adjustment purposes but are stable to forces in a vertical plane, either for load-bearing purposes (compressive forces) or for movement of the completed furniture (expansive and/or compressive forces). The spacer members also tend to be self locking if the assembled system is tilted during movement of the completed furniture.

The spacer members are in general substantially flat and are arranged across substantially at a right angle to the longitudinal direction of the shelf members, the engagement means being located at corners or diagonal extremities of the spacer members. However, the spacer members may as an alternative be of any other desired shape, for example cylindrical, either circular or elliptical in cross-section. The engagement means may be formed integrally with the spacer members or attachable thereto as separate components. An integral formation may be constituted by lugs or claw arrangements defining recesses or grooves for engaging the shelf member, whereas separate components may comprise knobs or discs, in which a knob or disc is formed or mounted for example at each corner of the spacer members, each upper and lower pair of knobs or discs being formed with opposed grooves for receipt of the edge regions of the shelf members. The recesses or grooves are generally shaped to accommodate edge regions of the shelf members and the distance between the bottoms of pairs of opposed recesses or grooves is slightly larger than the width of a shelf member for fitting therein.

Optionally, the engagement means may include means for tightening or clamping thereof against the shelf member. Such a means may comprise a horizontal surface of the recesses or grooves being formed with a small lip to reduce the clearance between the recess or groove and a shelf, thereby to aid rigidity in the completed furniture without substantially detracting from the sliding ability of the spacer member along the shelf member. Such lips also allow for easy correction of recess or groove size by the manufacture.

Alternatively or additionally, the engagement means may include a screw-threaded or other clamping arrangement whereby, after assembly at the desired location, pressure may be applied from one side of the groove or recess to cause gripping or clamping engagement of the shelf in the spacer member.

Where the engagement means are constituted by separate components they are preferably formed, in addition to the shelf member groove and at 90° thereto, with a spacer member groove. The purpose of the spacer member groove is for securing the component to the corner of a spacer member. The depth of the shelf member groove is preferably about 0.5-1.5mm deeper than the depth of the spacer member groove to allow clearance on the shelf member width, and the component is preferably attached to the spacer member so that the side (that is, shelf member-supporting surface) of the shelf member groove is approximately 0.5-1.5mm above the edge of spacer member, so as to allow clearance between the shelf member and the spacer member and thus accommodating any slight warping of the shelf. To allow for clearance of the shelf member within the groove, a tolerance of approximately 0.1-0.5mm is generally allowed over the nominal shelf member thickness.

Although for most purposes the engagement means on the spacer members are arranged such that in a plan view the spacer members in use are positioned straight across the shelf members at substantially right angles thereto, for some purposes the location means are such that the spacer members are at an angle, with respect to the shelf member, of other than 90°. In a side elevation, on the other hand, the spacer members are preferably substantially vertical, for maximum strength and minimum tendency to sideways tilting, known as "lozenging" or "matchboxing".

Using the system according to the invention, furniture can be built up as desired from pre-formed lengths of shelf members and spacer members. The spacer members in particular may be plain or alternatively decorated or ornamented and may be provided in a variety of lengths and with provision for only a single shelf member (for example at the upper edge only, as with a foot or base member), or two shelf members (at the upper and lower edges), or three or more shelf members (in which two or more spacer members are joined together by the shelf location means with respective upper and lower edges facing and defining a slot for receipt of an intermediate shelf member). Different lengths of spacer members may be to some extent multiples of each other, for example three short spacer members or two intermediate spacer members may be the same height as one long spacer member.

The shelf member engagement means can themselves be ornamented or decorative and can optionally carry pins or screws for extra shelf member security, hinge pins for cupboard doors, and other hardware.

The shelf members, spacer members and engagement means can be made from any suitable material. For example, shelf members and spacer members may be made from wood or a decorative veneered chipboard and separate engagement means may be made from a plastics material or a metallic material. Alternatively, shelf members and spacer members may be made from sheet metal or other sheet material and the engagement means may be a formed channel section in a similar material formed integrally therewith or attached thereto. The engagement means may also be constituted by a channel section attached for example by welding to the spacer member. The edge region of the shelf member may be locatable within such engagement means or may be locatable around the outside thereof, such that the engagement means are located within the channel-section edge region of the shelf member.

Embodiments of the invention will now be described by way of example with reference to the accompany drawings, of which:

Fig. 1 (a) and (b) are respectively a side elevation viewed from the inside and an end elevation of a disc-type engagement means, in each case showing the disc attached to the corner of a spacer member, and Fig. 1 (c) shows in cross section one way of providing for tightening or clamping of such an engagement means to a shelf member,

Fig. 2 (a) to (d) show how spacer members and shelf members may be assembled to form basic shelving furniture units;

Fig. 3 (a) to (h) show in elevation various sizes and styles of spacer members, all including separate disc-type engagement means;

Fig. 4 (a) to (d) show perspective views of various sizes and styles of spacer members, all including integral engagement means;

Fig. 5 shows two ways of constructing the support for a table;

Fig. 6 shows various other components;

Fig. 7 shows a design of table; and

Fig. 8 shows a dresser unit, the items of Figs. 7 and 8 being constructed from a furniture assembly system according to the invention.

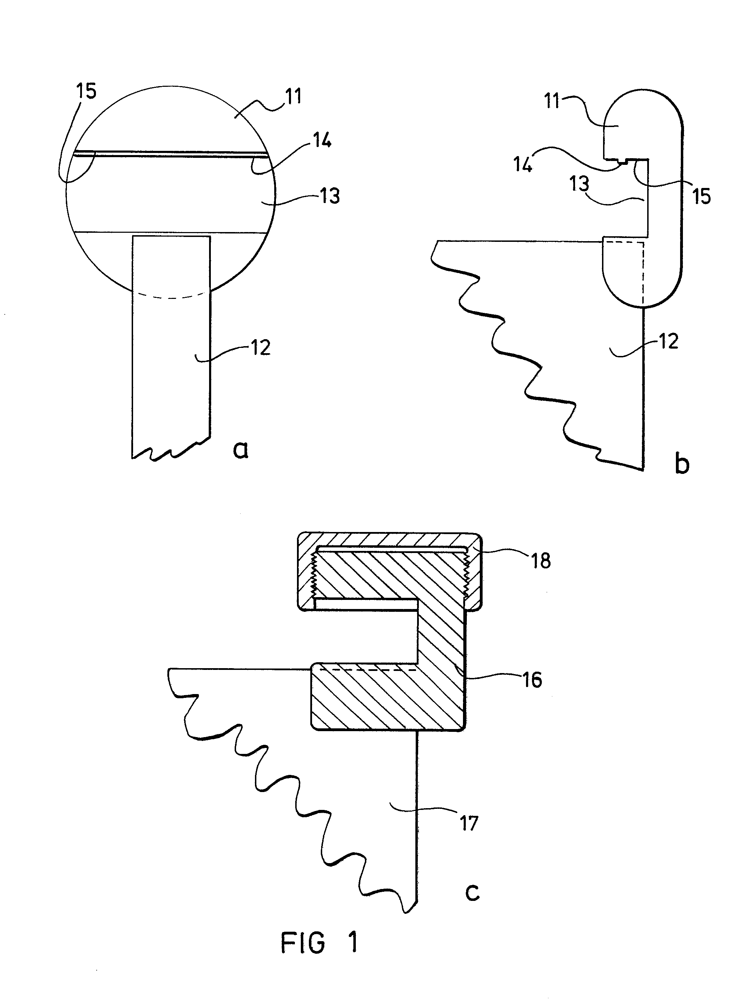

Referring to Fig. 1 (a), a side elevation of an engagement disc is indicated 11, attached to a top corner of a spacer member 12. In Fig. 1 (b), the same engagement disc is shown in end elevation. The engagement disc includes a groove 13 having an optional lip 14 depending from its upper side wall 15. The groove is for receipt of an edge region of a shelf member (not shown). In Fig. 1 (c), a similar type of engagement means 16 is illustrated as attached to a corner 17 of a spacer member; the engagement means is circular when viewed from above and includes a screw-threaded cap 18 which can be tightened into engagement with a shelf member the edge region of which is located in the groove.

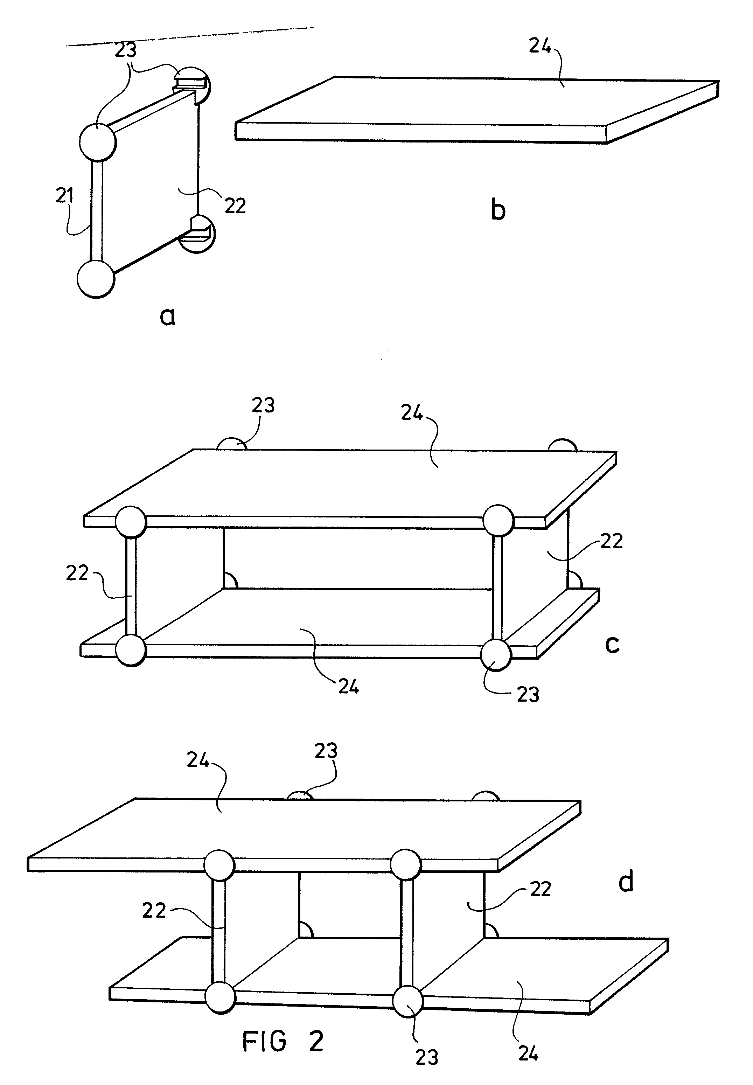

In Fig. 2 (a), a spacer member 21 is shown, consisting of a plain rectangular element 22 equipped at the corners with engagement discs 23.

Fig. 2 (b) shows a shelf member 24 and Fig. 2 (c) shows how two such spacer members and two such shelf members may be assembled to form a shelving unit. Fig. 2 (d) shows how the same members may be adapted to form a shelving unit to occupy an alcove which is wider than the length of the shelf members.

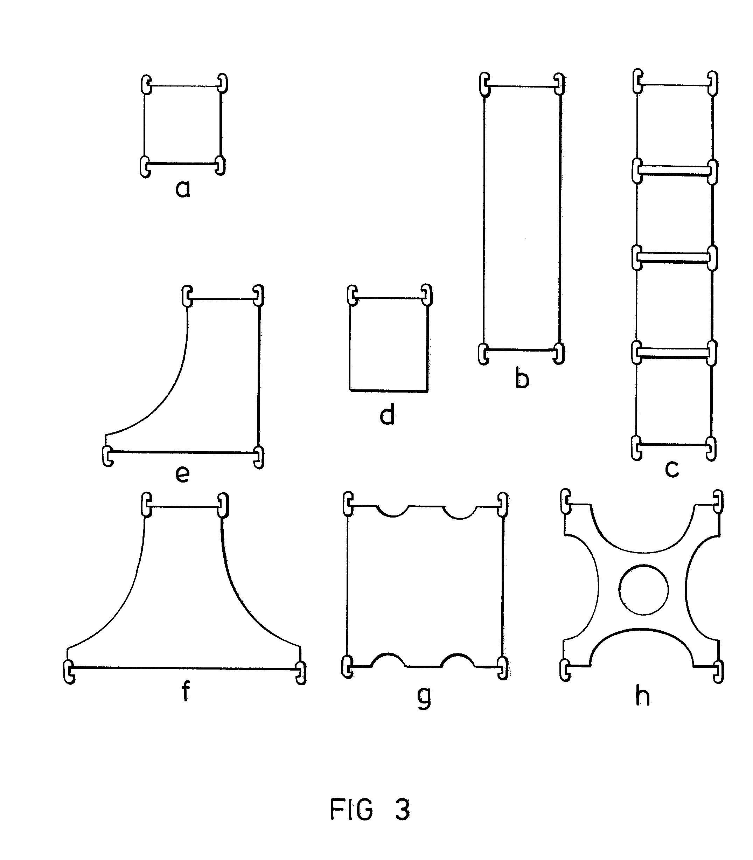

Fig. 3 shows examples of various designs of spacer members, including a short spacer member (a), a long spacer member equivalent in length to three short spacer members (b), a multiple spacer member (c), a foot or bookend spacer member (d), an offset reducing spacer member (e), a central reducing spacer member (f), and spacer members for changing direction (g and h) in which the upper and lower edges are provided with cut-outs or recesses to clear engagement means on spacer members below or above in the assembly. All the spacer members illustrated in Fig. 3 include separately-formed engagement means in the form of discs.

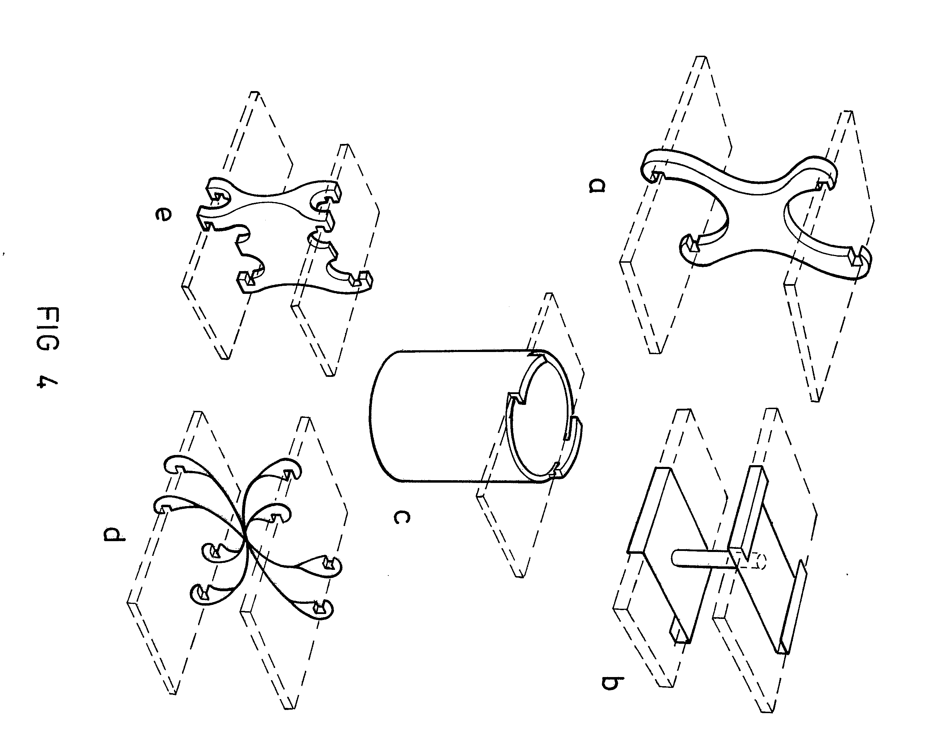

Fig. 4 shows examples of various spacer members, including a claw type member (a) suitable for production by stamping or machining, a pillar type spacer member (b) formed from sheet metal elements joined by a pillar, the side edges of the elements being bent to define channel sections, a cylindrical spacer member (c), shown without lower grooves for use as a base member, a skeletal spacer member (d) and a spacer member with unsymmetrical engagement grooves and a central support for the shelf (e). All the spacer members illustrated in Fig. 4 include integrally-formed engagement means in the form of lugs, channel sections grooves or claws; the position of shelf members is indicated by dotted lines.

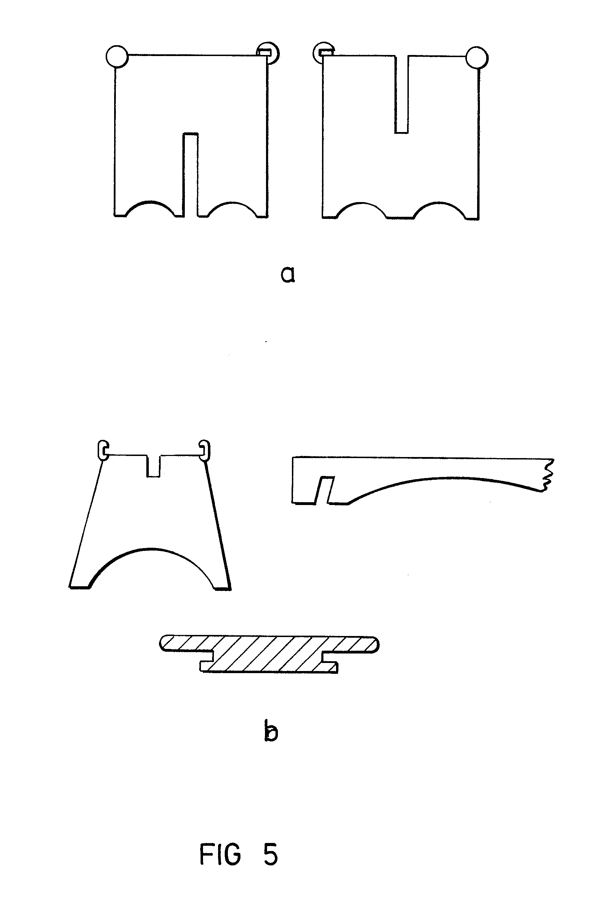

Fig. 5 (a) shows a pair of interlockable table supports with skewed engagement discs so that the table top is mounted diagonal-fashion relative to the supports. The same type of interlocking supports can be used without the skewing of the engagement discs (i.e. square with the support) but in such designs one of the four engagement discs would be bonded to the table top instead of to the table support so as to allow assembly and to locate the end of the table support that has no disc. This produces a symmetrical top appearance with one disc in the centre of each side of the table top.

Fig. 5 (b) shows a table leg including a pair of engagement discs, a partial view of a longitudinal separating member for connecting together and interlocking with a pair of such legs, and a table top in cross-section for fitting within and between the engagement means to conceal them when viewed from above.

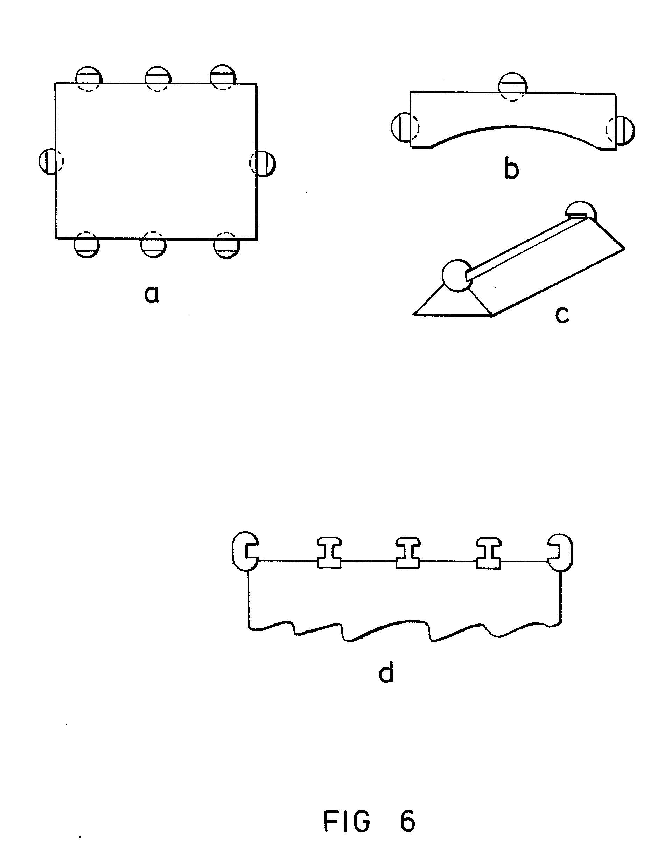

Fig. 6 shows various other components of a furniture assembly system according to the invention, including a rear panel for a cupboard (a), a skirt or anti-racking panel (b), a foot member (c) and a support spacer member· for a slatted shelf system (d), including double-grooved engagement discs for the shelf members.

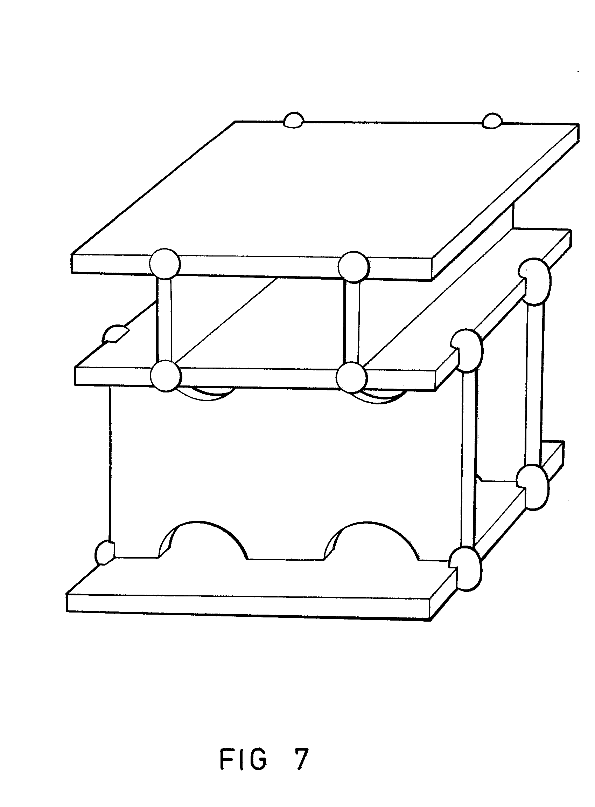

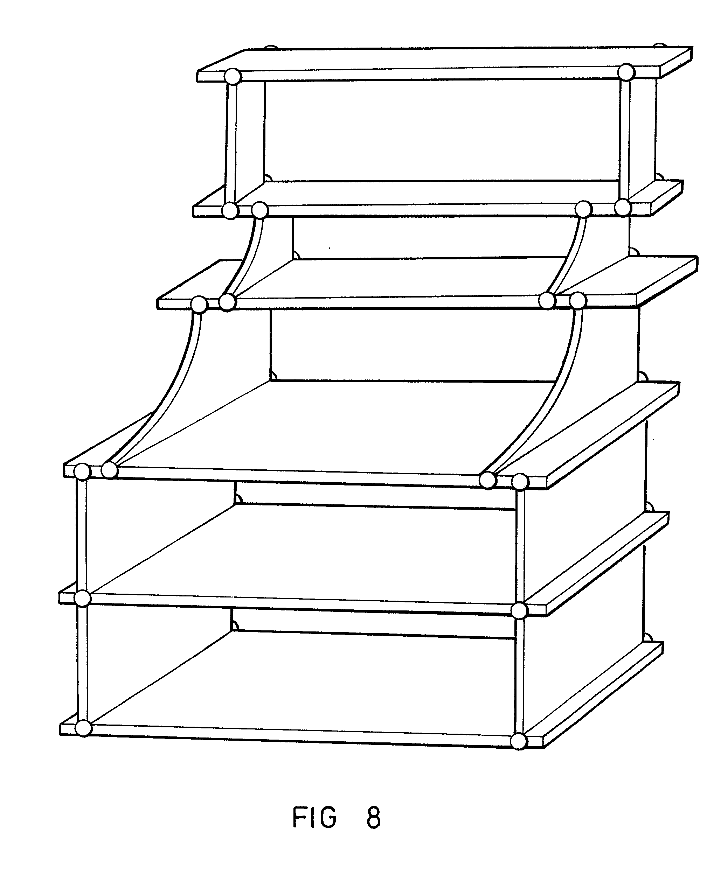

Figs. 7 and 8 show respectively a table and a dresser unit formed from a furniture assembly system according to the invention. In the table, pairs of spacer members, above and below the central shelf member respectively, are shown mutually at right angles, the lower pair having cut-outs for permitting the change of direction.

The invention also includes components for use with a furniture assembly as herein described, the components comprising a spacer, support or panel member including means for engagement at preferably longitudinal edge regions of shelf members, and optionally interlocking separator members.

It is to be understood that the interlocking separator members may be used in any plane in association with shelf member(s) or spacer member(s). Where slots or transverse channels are formed in separator members to render them interlockable with other members, the external slot or groove corners may be supported in the interlocked arrangement by means of engagement means such as knobs or discs formed with grooves, as hereinbefore defined.

## Claims

1. A furniture assembly system comprising shelf members and spacer members, in which in use the spacer members form substantially upright partitions between two or more shelf members, at least one of the upper and lower edges of each spacer member being interengageable with edge regions of a shelf member.

2. A furniture assembly system according to Claim 1, further including interlocking separator members.

3. A furniture assembly system according to Claim 1, in which the engagement means comprise members which define inwardly-facing opposed grooves or recesses for receipt therebetween of a shelf member.

4. A furniture assembly system according to any preceding Claim, in which the spacer members are engageable with longitudianl edge regions of the shelf members.

5. A furniture assembly system according to any preceding claim, in which both the upper and lower edges of the spacer members are provided with shelf member engagement means.

6. A furniture assembly system according to any preceding claim, in which the engagement means includes tightening or clamping means for enhanced gripping of or engagement with the shelf member.

7. A furniture assembly system according to Claim 6, in which the tightening or clamping means comprises a clearance-reducing lip formed in a horizontal surface of the grooves or recesses.

8. A furniture assembly system according to Claim 6, in which the tightening or clamping means comprises a screw-threaded pressure-applying clamp.

9. A furniture assembly system according to any preceding claim, in which the engagement means are formed integrally with the spacer members.

10. A furniture assembly system according to any of Claims 1 to 8, in which the engagement means are formed as separate components for fitting to the spacer members.

11. Components for use with a furniture assembly system according to any of Claims 1 to 10, the components including spacer, support or panel members including means for engagement with shelf members, or interlocking separator members.

12. Engagement means for use with a furniture assembly system according to any of Claims 1 to 10, the engagement means being formed with grooves for receipt of edge or corner regions of shelf members, spacer members or separator members.

0263710

FIG 1

FIG 2

0263710

FIG 3

FIG 4

0263710

a

b

FIG 5

0263710

FIG 6

0263710

FIG 7

0263710

FIG 8

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 612 289 (ZINK) * Column 3, line 63 - column 4, line 26; figure 1 * | 1-5,9, 11 | F 16 B 12/46 A 47 B 47/04 |
| X | CH-A- 161 709 (HEUMANN) * Whole document * | 1,6,8, 10,11, 12 | |
| A | FR-A-2 477 648 (PESCHET) * Claims 1,2; figures 1-4 * | 3-5,9 | |
| A | FR-A-2 468 023 (SOL) * Page 2, lines 9-32; figures 1,4,5 * | 2-4,6,7 ,10-12 | |

TECHNICAL FIELDS SEARCHED (Int. Cl.4)

A 47 B
A 47 F

The present search report has been drawn up for all claims

| Place of search | Date of completion of the search | Examiner |
|---|---|---|
| THE HAGUE | 05-01-1988 | SCHMITTER BERNARD |

EPO FORM 1503 03.82 (P0401)